Europäisches Patentamt

(19) European Patent Office

Office européen des brevets

(11) Publication number: **0 083 148**
**A2**

# (12) EUROPEAN PATENT APPLICATION

(21) Application number: 82304606.5

(22) Date of filing: 01.09.82

(51) Int. Cl.³: **A 45 B 11/00**
A 45 B 23/00, B 60 R 9/04
B 60 J 11/00

(30) Priority: 28.12.81 JP 198964/81
25.05.82 US 381810

(43) Date of publication of application:
06.07.83 Bulletin 83/27

(84) Designated Contracting States:
DE FR IT

(71) Applicant: Lee, James H.C.
4th Floor, No. 3-1, Lane 170 Section 1, Hsin Sheng South
Road
Taipei(TW)

(72) Inventor: Lee, James H.C.
4th Floor, No. 3-1, Lane 170 Section 1, Hsin Sheng South
Road
Taipei(TW)

(74) Representative: Baillie, Iain Cameron et al,
c/o Ladas & Parry Isartorplatz 5
D-8000 München 2(DE)

(54) Parasol assembly.

(57) A parasol suitable for sheltering a car or for providing shade during an outing. When used to provide shade for a car, the inventive parasol is unfolded and installed on a mounting bracket which comprises a socket tube, a spring and a hook, and is mounted on the top of the car. When the parasol is used apart from the car, a connecting tube is provided to support the parasol. As the parasol is unfolded and the lower end of the connecting tube is planted in the ground, the parasol acts as a sunshade.

EP 0 083 148 A2

EPC-11

## PARASOL ASSEMBLY

The invention relates to a multi-purpose huge awning for ready installation on the top of an automobile or for use in outings, on beaches and at other places.

Nowadays, the automobile has become common means of transportation all over the world, but due to dense population and limited open spaces, the owners of automobiles face serious parking problem. Especially, in summer time when people go out on errand or on picnic with their families, the interior of the automobile under the blistering sunshine becomes unbearably hot. Since the metal carbody absorbs heat quickly and the closed doors prevent heat dissipation, the temperature inside the car may reach as high as $50^{\circ} - 60^{\circ}C$ after exposure to sunshine for a short period. To drive a car under such conditions is a matter of discomfort and frustration. Though airconditioners are in common use in automobiles, it always takes at least 20 to 30 minutes to cool down the inside even if the controller is set at the maximum. Moreover, the whole world suffers today from a shortage of energy and steep oil prices. Motorist who desires to solve the problem of dissipating the unbearable heat inside his automobile resulting from hot, summer sunshine on his car has to face the problem of wasting energy. Up to date, car users have not yet found out a good approach in solving these problems.

In order to meet the said pressing demand, the inventor has made every effort and worked very hard to design a dual-purpose awning suitable for use by automobiles and in outings, pleasing in appearance and convenient in use. It proves to be an effective sunshade and serves the purpose of reducing power consumption.

The primary object of the invention is to protect automobiles from direct exposure to hot sunshine so as to contribute to the reduction of power consumption and relieve motorists from oppressive heat when they enter the car. Another object of the invention is to provide tourists playing on beaches and visiting scenic spots with an awning which is larger in size than those ordinarily used on beaches and provides better sunshade effects. In rainy days, the awning can serve as a huge umbrella for motorists who have to go out of the car to check and effect repair of their cars. The awning can be installed manually on the top of an automobile or the side thereof without the need of tools for protection against sunshine or rain. It is also convenient to carry along and set up as a parasol when vacationing on beaches and in outings.

The awing of the invention is different from any other huge parasols in the following aspects. The awning in accordance with the invention shades a much larger area than any ordinary beach parasol, yet it can be unfolded with considerable ease. It can be installed on the top of an automobile and taken down conveniently without any tool and the said operation will not cause any damage to the car body. When the awning is installed atop an automobile, the socket tube of the telescopic mounting bracket is used to receive the awning pole. Since the pin inside the socket tube firmly engages the pole, the awning and the mounting bracket are locked securely. In the meantime, since the mounting bracket firmly clasps the car body by movable hook means, the awning is securely held in place. When the awning is to be taken down, a slight lifting force is what is needed.

-3-

Moreover, the flexible hook means is spring-loaded and provided with a movable sleeve plate which is adjusted by sliding back and forth to suit the width of the car body. Installation or removal of the telescopic mounting bracket is effected simply by pulling the spring-loaded hook means downwards. The telescopic mounting bracket is in a delicate design so that it can be kept on the top of the automobile as a decoration when the awning is not in use. This saves the labor of disassembly and subsequent installation of the bracket. The awning cloth is of a size suitable to cover the automobile. The size, however, can be adjusted depending upon the incident angle of the sunlight. The awning is also provided with several pieces of spare cloth which can be attached to or removed from the awning by means of self-adhesive tapes attached to its rims. Furthermore, the invention is characterized in that the telescopic mounting bracket which can be installed on the top of the automobile and dismantled therefrom is designed according to the principles of dynamics so that the awning can withstand strong wind up to Force 5-6 Beaufort Scale in despite of its large coverage.

Many experiments have been made to test the practicability of the awning of the invention. According to the records, if the ambient temperature is $34^{\circ}C$, after an automobile is subject to direct exposure to sunshine for one hour, the temperature inside the automobile reaches as high as $60^{\circ}C$ or even higher. However, at the same ambient temperature, if an awning of the invention is used to shade the automobile, the temperature inside the automobile after direct exposure to the sunshine for two hours merely rises to approximately $40^{\circ}C$. Accordingly, the temperature difference of more than $20^{\circ}C$ proves the excellent efficacy of the awning of the invention.

The construction and effectiveness of the awning of the invention will be fully understood from the following detailed description with reference to the accompanying drawings, in which:

Figure 1 is a perspective view showing the awning of the invention being set up for sheltering an automobile in the sunshine,

Figure 2 is a perspective view showing the awning of the invention being set up as an umbrella during repair of an automobile in the rain;

Figure 3 is a perspective view showing the awning of the invention being set up as a parasol on beach;

Figure 4 is a perspective view of the telescopic mounting bracket of the invention;

Figure 5 is an exploded perspective view of the telescopic mounting bracket of the invention;

Figure 6 shows the awning in an unfolded condition and the telescopic mounting bracket of the invention installed on the top of an automobile respectively.

Figure 6A respectively illustrates the circular supporting base assembly and the lower end of the awning pole of the the invention;

Figure 6B is a perspective view of the lower end of the awning pole and the awning handle of the invention shown separately.

Figure 7 is exploded perspective views of the movable sleeve plate and the hook means of the invention;

Figure 7A is a perspective view of the assembly of the movable sleeve plate and the hook means of the invention;

Figure 7B is a schematic view illustrating that the hook means of the invention,when unlocked can be pulled away from the car body; and

Figure 8 is a schematic view of the awning cloth provided with spare ones to be readily adhered thereto.

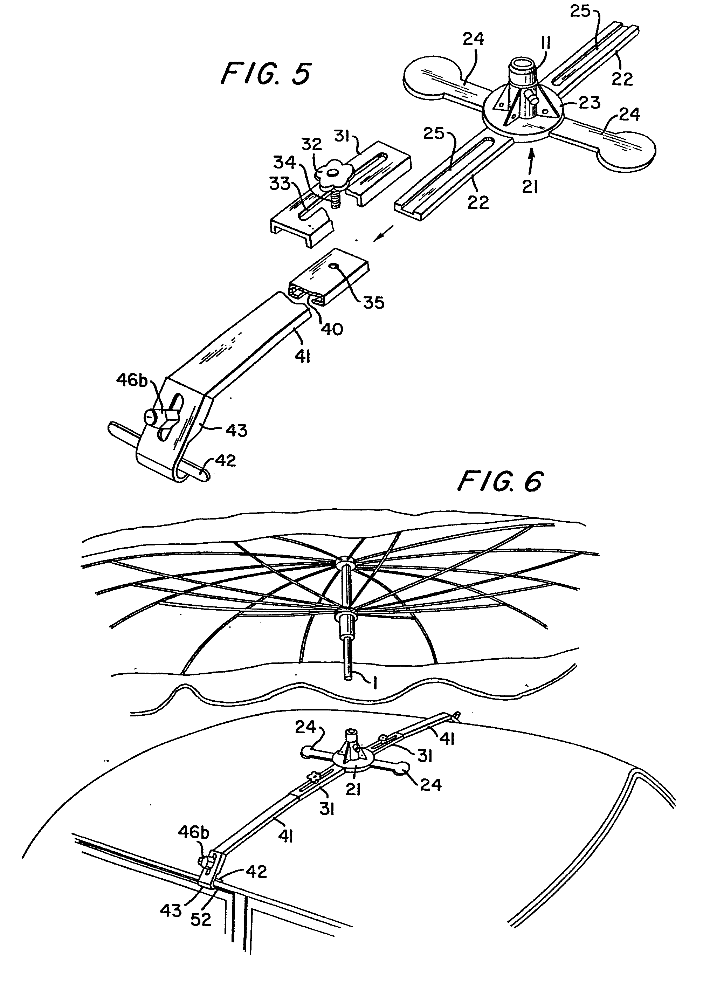

Now referring to Figure 4 or 5, a telescopic mounting bracket of the invention comprises mainly a circular supporting base assembly 21, cover plates 31, movable sleeve plates 41 and hook means 43. On the circular base 23 of the supporting base assembly 21, there is formed a socket tube 11. The circular base 23 is provided on either side thereof a fixing plate 22 with a slot 25. The guide plates 24 are detachably inserted into the circular base 23 and held perpendienlar to the fixing plates. The guide plates are made detachable for the purpose of ready packing and saving space. The fixing plates 22 can be respectively inserted into the channals 40 formed on the two movable sleeve plate 41 (see Figure 5). A cover plate 31 is provided to cover the portions of the fixing plate 22 and the movable sleeve plate 41. A sliding slot 33 is formed in the cover plate 31 for the insertion of the bolt 34 of the hand screw 32 and the bolt 34 passes through the threaded bore 35 in the movable sleeve plate 41.

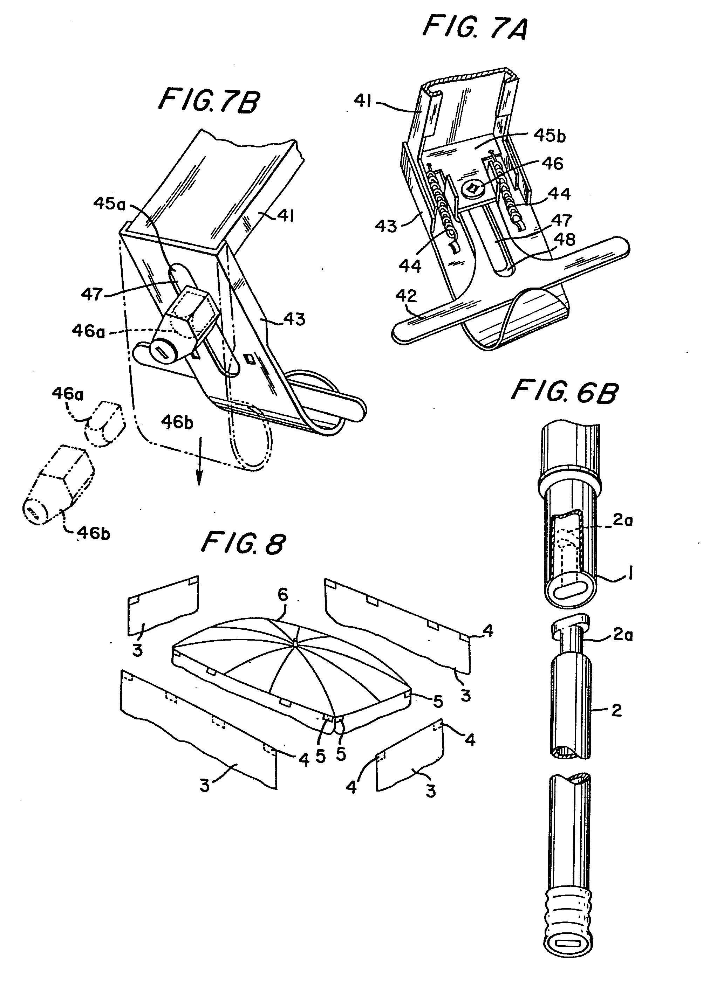

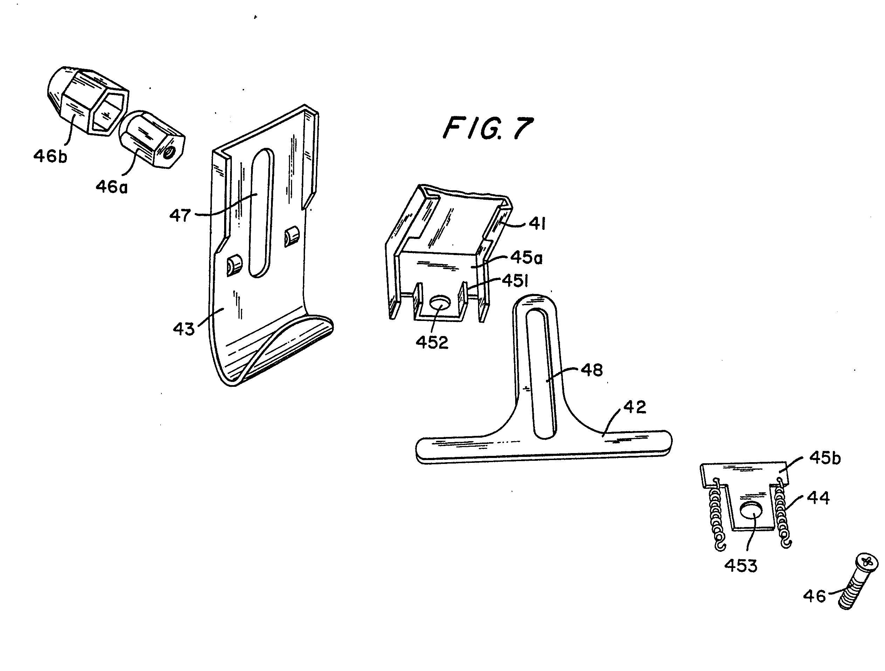

A hook means 43 having a sliding slot 47 is provided on the outer surface of the bending T-shaped connecting plate 45a formed at one end of the movable sleeve plate 41 (see Figure 7 or 7A). Between the guiding plates 451 of the connecting plate 45a, a T-shaped positioning plate 45b is inserted therein. Each of the connecting plates 45a is provided with an aperature 452 and the positioning plate 45b has a corresponding aperature 453. Between the two connecting plates 45a and 45b, a T-shaped fixing strip 42 with a sliding slot 48 is disposed. When the components shown in Figure 7 are assembled, a flat head screw 46 passes through aperature 453, sliding slot 48, aperature 452 and sliding slot 47 and is held securely by a hand screw cap 46a (see Figure 7). (In practice, the flat head screw 46 passes through the aperature 453 at first and after being secured to the positioning plate 45b, through sliding slot 48, aperature 452, and sliding slot 47.) On the top of the screw cap 46a, there is provided a locking means 46b to prevent the screw cap 46a from being loosened and parts from being stolen. In addition to the components described above, there are two spring means 44 between the positioning plate 45b and the hook means 43, so that the hook means 43 can be pulled downwards or outwards with respect to the connecting plate 45a (as shown by the dotted lines in Figure 7B) after the locking means 46b is unlocked and the hand screw cap 46a is loosened.

The steps of installing the telescopic mounting bracket on the top of an automobile comprise: positioning the circular supporting base assembly 21 in the center of the car top (see Figure 6); inserting the two guide plates 24 into the circular base 23, inserting the two fixing plates 22 into the channels formed on the movable sleeve plates 41; adjusting the engagement of the movable sleeve plates 41 and the fixing plates 22 with respect to the width of the car top; loosening the screw cap 46a by hand; pulling the T-shaped fixing strips 42 downwards to fit them into the draining grooves 51 at both sides of the car top; pulling the hook means 43 downwards to ensure their tight engagement with the steel edges 52 of the draining grooves at both sides of the car top by means of the retraction force of the spring means 44 inside the hook means 43; tightening the screw cap 46b by hand and lock it with the locking means 46b so that the hook means are tightly secured to both sides of the car top; pushing the cover plates 31 on the movable sleeve plates 41 towards the inner ends of the fixing plates 22 at both sides of the circular base 23 of the supporting base assembly so that the hand screw 32 passing through the movable sleeve plates 41 can be firmly held in the slots 25 of the fixing plates 22 and the movable sleeve plates 41, the fixing plates 22 and the cover plates 31 are securely connected together.

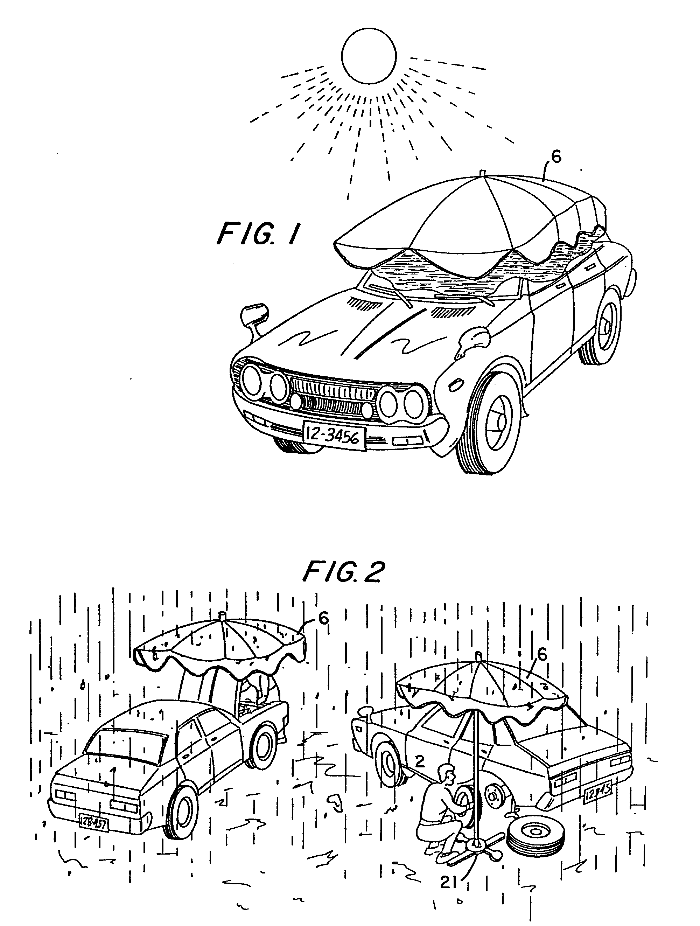

It is not necessary to dismantle the telescopic mounting bracket after it is installed on the top of the automobile. In view of its good-looking appearance, the telescopic mounting bracket may remain there as a decoration. To remove the telescopic mounting bracket from the top of an automobile, simply loosen the hand screws 32 on the movable sleeve plates 41, and exert a downward pulling force on the hook means 43. By so doing, the bracket is ready for removal. To mount the awning on the bracket, the procedures comprise: unfolding the awning, turning the handle 2 counter-clockwise for 180° (see Figure 6B) releasing the T-shaped pin 2a at the upper end of the handle from the connecting tube 1 at the lower end of the awning pole, and manually inserting the connecting tube 1 into the socket tube 11 on the mounting bracket. The T-shaped pin 13 inside the socket tube 11 and the lock 11a on the perimeter of the socket tube 11 will ensure the connecting tube 1 at the lower end of the awning pole to engage firmly with the socket tube 11. On the other hand, removal of the awning can be effected simply by unlocking the lock 11a and lifting the awning from the mounting bracket. The awning can then be folded by inserting the T-shaped pin 2a at the top of the awning handle 2 into the connecting tube 1 at the lower end of the awning pole and turning the awning handle clockwise for 180°. Figure 1 illustrates an awning of the invention mounted on the top of an autombile. In order to protect the awning against strong wind, four nylon ropes, each of which has a hook attached thereto, are provided at four sides of the awning frame and they can be, if necessary, hooked respectively to the small holes 14a formed at the lower section of the supporting fins 14 to further strengthen the stability of the mounted awning.

-8-

In case the sunlight strikes the automobile at a sharp angle, four pieces of spare awning cloth 3 can be optionally attached to the rim of the awning cloth 6 depending upon the angle of incidence of the sunlight. As shown in Figure 8, the self-adhesive tapes 5 are provided at the peripheral edges of the awning cloth 6 and the self-adhesive tapes 4 are provided at the upper edges of the inner surface of the spare awning cloth. Therefore, the spare awning cloth can be attached to the awning cloth with the tapes at corresponding positions or detached therefrom easily.

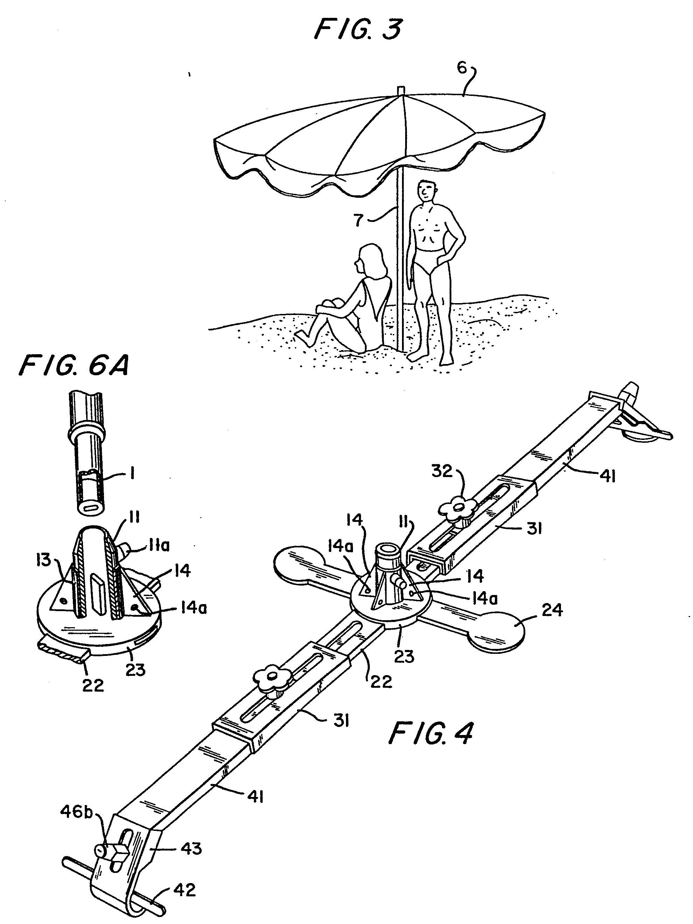

Figure 3 illustrates the awning of the invention being used on beaches or in outings as a sunshade. To install the awning on the ground, the procedures comprise first unfolding the awning, turning the awning handle 2 counter-clockwise for 180° to remove the awning handle 2, connecting the tube 7 having a tapered lower end to the connecting tube 1 provided at the lower end of the awning pole, and pressing the tapered end of the connecting tube 7 into the ground. Figure 2 illustrates the awning of the invention being used as an umbrella when repairing an automobile in the rain. For such purpose, the handle 2 is not removed but is directly inserted into the socket tube 11 of the circular supporting base assembly 21.

In summary, the awning of the invention for shading automoboiles from direct exposure to sunshine is not only novel and practical but also simple in construction and convenient in use. It also contributes to the conservation of energy, and thus has special value in industrial development.

-9-

## C L A I M S

1.     A parasol assembly comprising:
a mounting bracket, which itself comprises ·a circular supporting base (21); two mounting plates (22) disposed on opposite sides of said base, each of said plates having an aperture (25) therein; two movable sheathing plates (41) removably connected to said mounting plates; two opposed fixing plates (24) attached to said base, and disposed equidistant between said mounting plates; two inverted T-shaped fixing strips (42) each being movably attached to one of said sheathing plates; two connecting plates (45b) each being movably attached to one of said fixing strips at one end thereof, and having a hook (43) on the opposite end thereof; and a socket tube (11) connected to said base and supported by a plurality of supporting fins (14), said tube being adapted to receive one end (1) of the parasol pole; and a parasol (6) comprising an end (1); a canopy secured to the end; and means for securing the end to the socket tube.

2.     A parasol assembly as in claim 1, further comprising a pole extension (7) which may be removably connected to the end of the pole.

3.     A parasol assembly as in either of claims 1 or 2, wherein the socket tube further comprises a pin (13) for removably securing the end of the pole.

4.     A parasol assembly as in either of claims 1 or 2, wherein a spring (44) connects at least one of the connecting plates to its corresponding hook.

5.     A parasol assembly as in either of claims 1 or 2, wherein at least one of the supporting fins has means (14a) therein for receiving an external securing means.

-9-

6.    A parasol assembly as in claim 3, wherein a spring (44) connects at least one of the connecting plates to its corresponding hook.

7.    A parasol assembly as in claim 1 or 2 further comprising additional portions (3) for providing additional protection, and means (5) for securing said additional portion to said parasol.

0083148

1 / 5

FIG. 1

FIG. 2

FIG. 3

FIG. 6A

FIG. 4

FIG. 5

FIG. 6

FIG. 7A

FIG.7B

FIG. 6B

FIG. 8

FIG. 7